(19)

Europäisches
Patentamt
European
Patent Office
Office européen
des brevets

(11) **EP 4 336 407 A1**

(12) **EUROPEAN PATENT APPLICATION**

(43) Date of publication:
**13.03.2024  Bulletin 2024/11**

(21) Application number: **22194913.4**

(22) Date of filing: **09.09.2022**

(51) International Patent Classification (IPC):
*G06N 3/02* (2006.01)      *G06V 10/776* (2022.01)

(52) Cooperative Patent Classification (CPC):
**G06N 20/00; G06V 10/764; G06V 10/766;
G06V 10/776; G06V 10/82; G06V 10/993;
G06V 20/56**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Aptiv Technologies Limited
St. Michael (BB)**

(72) Inventor: **ZHU, Weimeng
42119 Wuppertal (DE)**

(74) Representative: **Bardehle Pagenberg
Partnerschaft mbB
Patentanwälte Rechtsanwälte
Prinzregentenplatz 7
81675 München (DE)**

(54) **METHOD FOR UNCERTAINTY ESTIMATION IN OBJECT DETECTION MODELS**

(57)    The present disclosure relates to a computer-implemented method for evaluating a prediction quality of a model usable for detecting objects. The method comprises steps of: inputting, into the model, a set of data samples, each data sample comprising a scene representation including an object; outputting, by the model, a set of predictions, the set of predictions comprising, for each data sample of the set of data samples, a predicted feature of the object in the scene representation and a predicted uncertainty associated with the predicted feature; estimating an uncertainty estimation quality of the model based on the set of predictions; and determining, based on the uncertainty estimation quality, whether a further training of the model to improve the uncertainty estimation quality is required. In addition, the present disclosure relates to a computer-implemented method for detecting objects in a vicinity of a vehicle as well as a corresponding computer program, apparatus, and vehicle.

200

210 — Inputting, into the model, a set of data samples, each data sample comprising a scene representation including an object

220 — Outputting, by the model, a set of predictions, the set of predictions comprising, for each data sample of the set of data samples, a predicted feature of the object in the scene representation and a predicted uncertainty associated with the predicted feature

230 — Estimating an uncertainty estimation quality of the model based on the set of predictions

240 — Determining, based on the uncertainty estimation quality, whether a further training of the model to improve the uncertainty estimation quality is required

**Fig. 2**

EP 4 336 407 A1

## Description

### Field of the invention

The present disclosure relates to a computer-implemented method for evaluating a prediction quality of a model usable for detecting objects as well as to a computer-implemented method for object detection using a model evaluated according to the method for evaluating the prediction quality of the model. In addition, the present disclosure relates to a corresponding object detection model, to a computer program, to an apparatus as well as to a vehicle comprising the aforementioned apparatus.

### Background

Typically, object detection models are used in mechanical agents (like vehicles, cars, robots etc.) to enable them to detect obstacles in their surroundings. With the increasing maturity of object detection models, these models are applied to many use cases across all industries, such as autonomous driving of vehicles, production automation with robots or predictive maintenance. However, especially for use cases which are safety critical, sole object detection models are not sufficient. Instead, models are required to additionally predict an uncertainty associated with their object detection and/or classification predictions. This uncertainty may represent the model's confidence regarding a given prediction and may allow a technical system/mechanical agent to use this information to influence its further actions.

A solution known in the art for considering the uncertainty is presented by Feng, Di; Rosenbaum, Lars; Dietmayer, Klaus in "Towards safe autonomous driving: Capture uncertainty in the deep neural network for LiDAR 3D vehicle detection", 2018, 21st international conference on intelligent transportation systems (ITSC). IEEE, 2018. In the presented approach, the authors *inter alia* disclose a way to capture aleatoric uncertainty (also referred to as observation uncertainty representing the uncertainty introduced by observation noises inherent in sensors). While for classification tasks, this may be achieved by using the *softmax function*, the aleatoric uncertainty for a regression task (i.e., object detection) maybe captured by modeling an observation likelihood as a multi-variate Gaussian distribution.

However, the solutions known in the art regarding uncertainty prediction have the drawback that a ground truth for verifying the predicted uncertainty is lacking. Accordingly, it is difficult to verify whether a model's predicted uncertainty accurately represents the aleatoric uncertainty of the underlying technical system/mechanical agent. In an attempt to ensure accurate uncertainty predictions, models are often trained on large datasets and for many epochs. However, as no reliable verification of the actual accuracy of the uncertainty prediction quality is available, the training of the models typically relies on the assumption that a more intensive training based on an increased set of training data and increased training time, leads to an improved predicted uncertainty estimation. However, such an approach maybe unsuccessful, since over-training (overfitting) a model may even worsen the prediction accuracy of the model, which can have severe impact on the safety of the underlying technical system. In other cases, the over-training may not worsen the prediction accuracy of the model, but may not increase the prediction accuracy, resulting in inefficient computation resource usage.

Against this background, there is a need for a method for evaluating a prediction quality of a model usable for detecting objects for example in the vicinity of a mechanical agent.

### Summary of the invention

The above-mentioned problem is at least partly solved by a computer-implemented method according to claim 1, a computer-implemented method according to claim 10, a model for object detection according to claim 11, a computer program according to claim 13, an apparatus according to claim 14, and by a mechanical agent, preferably a vehicle, according to claim 15.

In an aspect of the present invention relates to a computer-implemented method for evaluating a prediction quality of a model usable for detecting objects, the method comprising the steps of: inputting, into the model, a set of data samples, each data sample comprising a scene representation including an object; outputting, by the model, a set of predictions, the set of predictions comprising, for each data sample of the set of data samples, a predicted feature of the object in the scene representation and a predicted uncertainty associated with the predicted feature; estimating an uncertainty estimation quality of the model based on the set of predictions; and determining, based on the uncertainty estimation quality, whether a further training of the model to improve the uncertainty estimation quality is required.

By determining based on the estimated uncertainty quality whether the model needs further training or is application ready, it is verified that only a model, which accurately and reliably predicts uncertainty is deployed into technical systems/mechanical agents, which increases the efficiency and safety of the system. The object detection may for example be applied to a vicinity of a mechanical agent (e.g., a vehicle, a car, a drone, a ship or a robot).

According to a further aspect, estimating the uncertainty estimation quality comprises generating an uncertainty distribution by, for each of the predicted features of the set of predictions, scaling a difference between the predicted feature of the object and a corresponding ground truth.

Scaling a difference between the predicted feature of the object and a corresponding ground truth may provide for an efficient way to generate an uncertainty distribution, despite the fact that the model operates in a deterministic manner. In other words, a plurality of different samples may be used to generate an uncertainty distribution which may then be used to evaluate the quality of the uncertainty estimation.

According to further aspect, estimating the uncertainty estimation quality further comprises determining the uncertainty quality by calculating a statistical property of the uncertainty distribution.

Calculating a statistical property provides a metric that may allow to reasonably interpret whether the uncertainty estimation quality if sufficiently high or too low, i.e., whether the model is application ready or needs further training.

In yet a further aspect, scaling comprises determining a post-processed predicted uncertainty based on the predicted uncertainty and dividing the difference by the post-processed predicted uncertainty.

A post processed predicted uncertainty value may allow for a simplified operation of the aforementioned metric.

According to a further aspect, conducting the further training of the model comprises determining a first loss associated with a first loss weight using a regression loss function, determining a second loss associated with a second loss weight using an uncertainty loss function, and combining the first loss and the second loss according to the associated first and second loss weights.

Combining (e.g., summing) the losses may allow to add the capability of uncertainty estimation to an already existing model architecture without having to adapt the regression loss function that a model typically comprises, which may further decrease computational complexity.

According to an additional aspect, training the model further comprises: adapting a value of the first weight and/or a value of the second weight based on the first loss and/or the second loss; wherein the value of the first weight and the value of the second weight is between an upper weight limit value and a lower weight limit value.

Adapting the value of the weights may allow to balance the effect of a single loss on the combined loss function, providing additional flexibility for training the model.

According to a further aspect, the method further comprises: setting, prior to training, the value of the first weight to the upper weight limit value and the value of the second weight to the lower weight limit value; and wherein adapting further comprises: determining that the first loss is smaller than or equal to a detection quality threshold; and setting the value of the second weight to the upper weight limit value; or increasing the value of the second weight by a preset value.

By setting the value of the first weight to the upper weight limit and the value of the second weight to the lower weight limit, it may be ensured that the model is trained to accurately predict the feature of the object. This maybe necessary, because training the uncertainty prediction associated with the feature prediction is most efficient if the feature prediction is already trained. Once this is achieved, training the uncertainty prediction may be activated either binary or step-wise.

According to a further aspect, the scene representation is generated based on at least one of: radar data, image data, Light Detection and Ranging (LiDAR).

According to a further aspect, the predicted feature of the object in the scene representation indicates bounding box information associated with the object comprising at least one of: a position of the object, a size of the object, a speed of the object, a rotation of the object.

Generating the scene representation based on sensor data increases the accuracy of the scene representation and thus serves as a more precise data foundation for the prediction.

A further aspect of the present invention relates to a computer implemented method for detecting objects in a vicinity of a vehicle, the method comprising the steps of: receiving a scene representation; and generating a predicted feature of an object within the scene representation and a predicted uncertainty associated with the predicted feature of the object within the scene representation; wherein generating is based on a model usable for detecting objects evaluated according to the method of any of the preceding aspects.

Since the model has been provided according to the method of the present invention, the model may output an accurate and reliable prediction for the feature of the object as well as an accurate uncertainty associated with the object. Accordingly, application efficiency and safety may be improved.

A further aspect of the present invention refers to a model usable for detecting objects, the model being evaluated according to the method of any one of the preceding aspects.

According to a further aspect, the model comprises: an object detection head configured to output a predicted feature of an object within the scene representation; and an uncertainty head configured to output a predicted uncertainty associated with the predicted feature of the object within the scene representation.

By adding an individual uncertainty head for outputting the predicted uncertainty, accuracy of the uncertainty prediction is increased due to less shared feature embeddings with the object detection head.

A further aspect of the present invention refers to a computer program comprising instructions, which when executed by a computer, causing the computer to perform the method(s) described above.

A further aspect of the present invention refers to an apparatus comprising means configured to perform the method(s) as described above and/or comprises a model as described above.

A further aspect of the present invention refers to a vehicle comprising the aforementioned apparatus.

**Brief description of the drawings**

Various aspects of the present invention are described in more detail in the following by reference to the accompanying figures without the present invention being limited of the embodiments of these figures.

Fig. 1a     illustrates an exemplary visualization of the concept of uncertainty estimation according to aspects of the present invention.

Fig. 1b     illustrates an exemplary further visualization of the concept of uncertainty estimation according to aspects of the present invention.

Fig. 2      illustrates a computer-implemented method for evaluating a prediction quality of a model according to aspects of the present invention.

Fig. 3a     illustrates an overview of a first architecture of an object detection model according to aspects of the present invention.

Fig. 3b     illustrates an overview of a second architecture of an object detection model according to aspects of the present invention.

Fig. 4      illustrates an overview of training an object detection model according to aspects of the present invention.

**Detailed description**

In the following, aspects of the present invention are described in more detail.

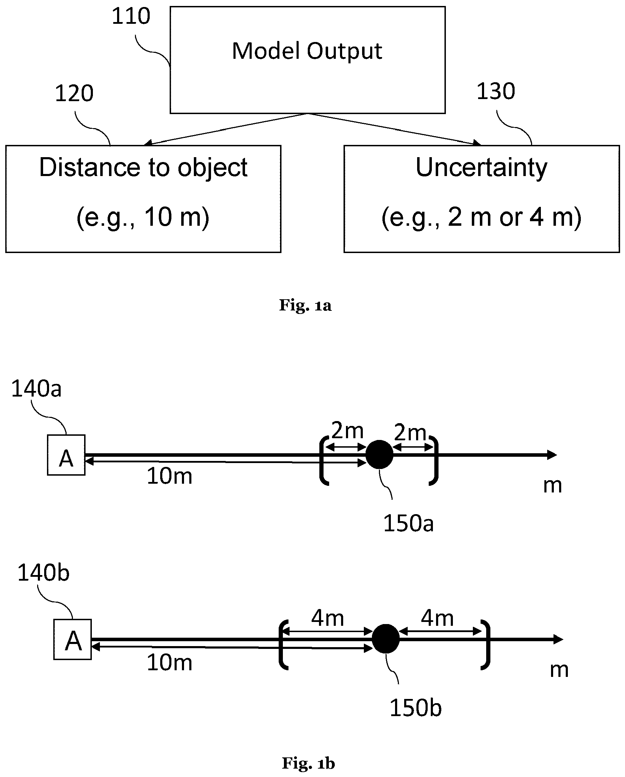

Figs. 1a and 1b illustrate an exemplary visualization of the concept underlying the uncertainty estimation according to aspects of the present invention. A model in accordance with the present invention may output a model output 110, which may comprise a predicted feature 120 of an object in a scene representation. The model output 110 may also comprise a predicted uncertainty 130 associated with the predicted feature of the object in the scene representation.

In the present example, the predicted feature 120 maybe a distance to the object, i.e., the distance between a mechanical agent 140a-b and the object 150 a-b. It is to be understood, that this is only an example to illustrate the general concept of uncertainty estimations with respect to one predicted feature 120 (in this case the distance). It may be possible that other features, like position, size, speed, or rotation of the object are predicted. Furthermore, it maybe possible that the model predicts more than one feature 120 in a combined manner. Accordingly, the model output would also comprise more than one associated uncertainty prediction 130. It may also be possible that a plurality of models is combined, wherein each model of the plurality of models predicts one feature (e.g., a first model predicts the distance to the object and the associated uncertainty, a second model predicts the position of the object and the associated uncertainty and so forth).

In the following, two examples are further explained. In both examples, a predicted distance 120 between an agent 140a-b and an object 150a-b as well as a predicted associated uncertainty 130 is depicted. Due to (aleatoric) uncertainty implied by the scene representation (e.g., produced by noise in sensor data used for generating the scene representation), the predicted uncertainty 130 may vary even though the scene (i.e., in this example the object 150a-b being 10 meters away from the agent 140a-b) stays the same. It is assumed that the uncertainty in the first example based on agent 140a is smaller than in the second example based on agent 140b, as indicated by the distance of the brackets around the object 150a-b. In other words, for example, the sensor data of the scene representation used in the example based on agent 140a comprises less noise than the sensor data of the scene representation of the example based on agent 140b.

In the first example, it is assumed that the model predicts that the distance 120 from the mechanical agent (A) 140a to the object 150a is 10 meters. The distance is illustrated by an arrow between agent 140a and the object 150a. The predicted uncertainty 130 may in this example be 2 meters. As a result, the relation between the predicted feature 120 and the associated predicted uncertainty 130 may be described as a distribution in which the predicted feature 120 is the mean value (e.g., 10 meters) and the associated uncertainty 130 is the standard deviation (e.g., 2 meters).

In this example, the meaning of the uncertainty may thus be described as follows. The model predicts that the object 150a is 10 meters away from the agent 140a. The associated uncertainty 130 of 2 meters, however, indicates that the object 150a may also be only 8 meters away from the agent 140a or may be 12 meters away from the agent 140a. Accordingly, the uncertainty may represent, as shown, an interval of distance values (in this example, [8; 12]).

In the second example, it is assumed that the model predicts that the distance 120 from the mechanical agent 140b to the object 150b is also 10 meters. The distance is illustrated again by an arrow between the agent 140b and the object 150b. However, the predicted uncertainty 130 may in this example be 4 meters. As a result, the relation between the predicted feature 120 and the associated predicted uncertainty 130 may be described as a distribution, in which the predicted feature 120 is the mean value (e.g., 10 meters) and the associated uncertainty 130 is the standard derivation (e.g., 4 meters). Compared to the first example, the associated uncertainty may be considered higher than in the first example.

In this example, the meaning of the uncertainty may thus be described as follows. The model predicts that the object 150b is 10 meters away from the agent 140b. The associated uncertainty 130 of 4 meters, however, indicates that the object 150b may also be only 6 meters away from the agent 140b or may be 14 meters away from the agent 140b. Accordingly, the uncertainty may represent, as shown, an interval of distance values (in this example, [6; 14]).

Accordingly, an uncertainty may be considered high, if the standard deviation is large (example based on agent 140b), and may be considered low, if the standard deviation is small (example based on agent 140a).

Generally, one may use a ground truth for determining how accurate the prediction of the distance between the mechanical agents 140a-b and the object 150a-b is. Ground truth is information that is known to be real or true, e.g., provided by direct observation and measurement. With respect to the two above-given examples, one may assign training data with a ground truth indicating the actual distance of the object 150a-b and the agent 140a-b. Then, one may compare the ground truth with the predicted value, which allows to determine how accurate the prediction by the model was.

However, due to the nature of uncertainty, other than for the object detection task, there is no ground truth on which the accuracy of predicted uncertainty may be evaluated (i.e., there is no actual ground truth representing the actual uncertainty). In order to serve as a reliable tool for decision making, however, it is necessary that the model's uncertainty estimation quality (i.e., how accurate the model is able to predict the uncertainty) is evaluated such that only uncertainty predictions of a model having a high estimation quality is actually used for further assessments.

The present invention may solve this problem by providing a method 200 for evaluating a prediction quality of the model by evaluating and validating the model's uncertainty estimation quality. Further details on the proposed solution are explained with respect to the following figures.

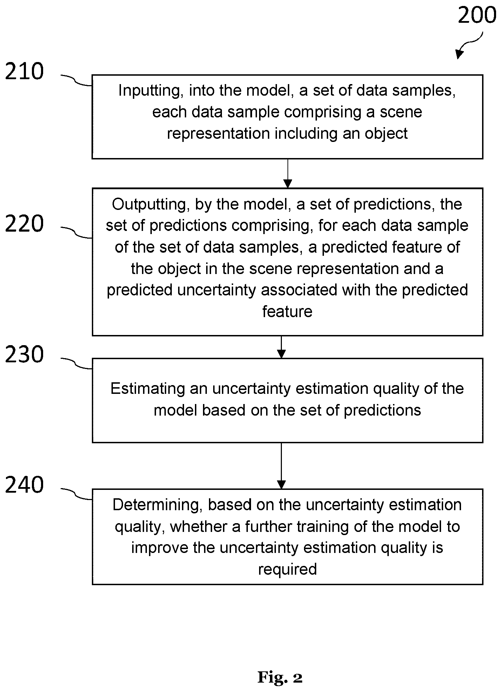

Fig. 2 illustrates a computer-implemented method 200 for evaluating a prediction quality of a model according to aspects of the present invention. The method may be used to validate whether the model is sufficiently trained (i.e., the model's performance in terms of the prediction quality with respect to object detection and/or uncertainty prediction is sufficiently good). The model may be an object detection model (i.e., a model usable of detecting objects 150a-b for example in vicinity of a mechanical agent 140a-b). The agent 140a-b may be a vehicle, a robot or any other suitable device applicable for object detection use cases. The vicinity may refer to an environment surrounding the agent 140a-b, which may differ depending on the use case of the agent 140a-b. For example, if the agent 140a-b is a vehicle, the environment may refer to a road traffic scenario. If the agent 140a-b is a robot, for example used in a production road, the environment may refer to the robot's location of an assembly line. Therefore, objects 150a-b to be detected may depend on the use case, e.g., a pedestrian, another vehicle, a tree, or (a part of) another robot within the same assembly line or a service mechanic.

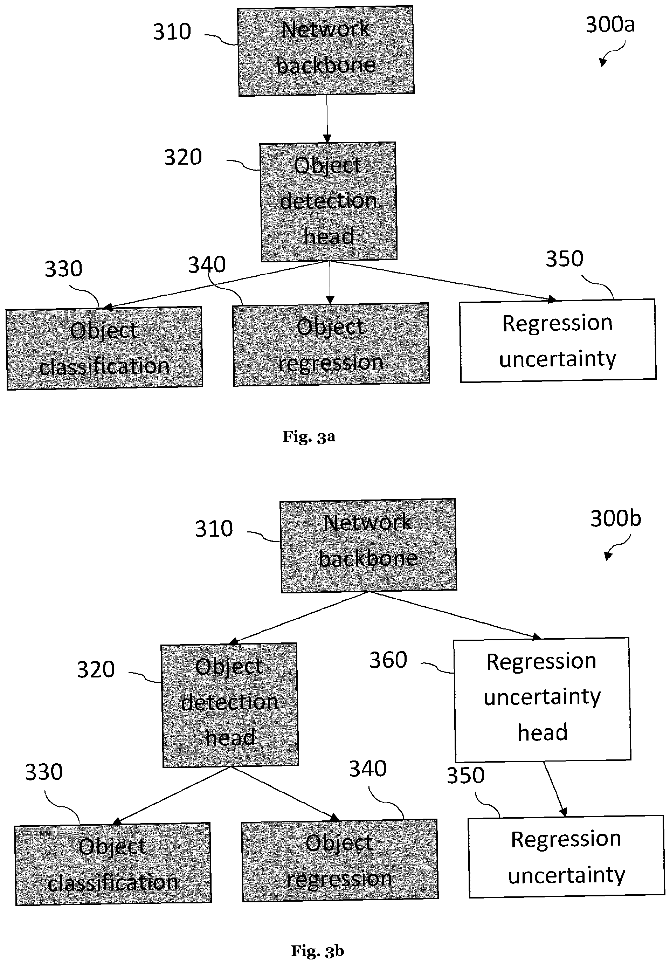

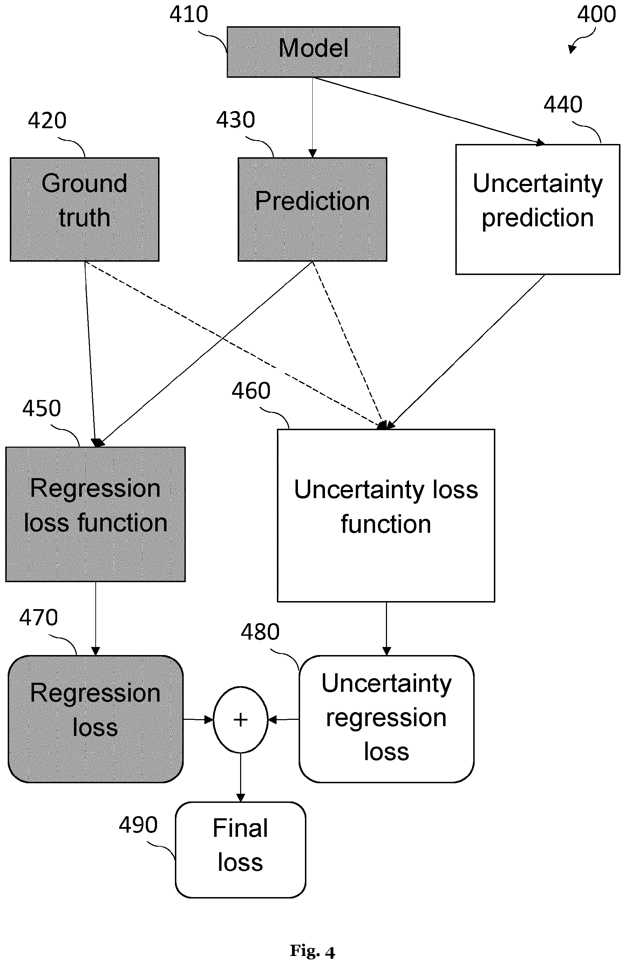

In step 210, a set of data samples, each data sample comprising a scene representation including an object 150a-b is input into the model. A scene representation may be generated based on radar data of the scene, image data of the scene, LiDAR data of the scene or a combination thereof. The data may be obtained from at least one sensor of the mechanical agent 140a-b, which monitors the vicinity of the agent 140a-b. The model may have an architecture as explained with respect to Figs. 3a and b. The model may be trained as explained with respect to Fig. 4. A set as used within this disclosure, may refer to one or more.

In step 220, a set of predictions, the set of predictions comprising, for each data sample of the set of data samples, a predicted feature of the object 150a-b in the scene representation and a predicted uncertainty associated with the predicted feature is output by the model. A predicted feature of the object 150a-b may be associated with bounding box information of the object 150a-b, e.g., a position of the object, a distance to the object, a speed of the object or a rotation of the object.

In step 230, an uncertainty estimation quality of the model based on the set of predictions is estimated. Due to the nature of uncertainty, no ground truth is available for assessing the quality of the uncertainty predication. However, by determining the uncertainty estimation quality of the model using the predicted uncertainty, a (data-driven) validation metric is disclosed which allows to evaluate whether the model is able to accurately predict the uncertainty or not. Accordingly, the uncertainty estimation quality may indicate how accurate the predicted uncertainty represents an uncertainty implied by the scene representation. The uncertainty implied by the scene representation may be caused by noise or sensor inaccuracy affecting the mechanical agent 140a-b, which may represent the aleatoric uncertainty of the observations (i.e., recordings/data of the sensors used for generating the scene representation). Estimating the uncertainty estimation quality may comprise generating an uncertainty distribution by, for each of the predicted features of the set of predictions, scaling a difference between the predicted feature of the object and a corresponding ground truth. Estimating the uncertainty estimation quality may further comprise determining the uncertainty quality by calculating a statistical property of the uncertainty distribution. Scaling may comprise determining a post-processed predicted uncertainty based on the predicted uncertainty and dividing the difference by the post-processed predicted uncertainty.

In step 240, it is determined based on the uncertainty estimation quality, whether a further training of the model to improve the uncertainty estimation quality is required (i.e., to improve the uncertainty prediction capabilities of the model). It may also be possible that the uncertainty estimation quality is determined for a plurality of models, wherein each model has been trained differently (e.g., different hyper-parameter settings), to determine an optimal model (e.g., the model having the highest uncertainty estimation quality). Further training may be required if the uncertainty estimation quality is low, which indicates that the predicted uncertainty is insufficiently accurate. Providing the indication may allow to efficiently validate the model's performance regarding the uncertainty estimation without having to rely on ground truth for uncertainty estimations, which typically does not exist with respect to predicted uncertainty. As a result, the method described above may be used for optimizing and/or providing an object detection model.

The training may be conducted as explained with respect to Fig. 4. For the further training, hyper-parameters (e.g., learning rate, momentum choice, number of epochs or batch size) may be changed to achieve better training results. Further training may not be required if the uncertainty estimation quality is high, which indicates that the predicted uncertainty represents the uncertainty implied by the scene sufficiently accurate. Deciding that the model needs to be further trained if the uncertainty estimation quality is considered inaccurate may avoid that an insufficiently trained model is deployed into a production system, which may decrease system safety. Deciding that the model needs no further training may in turn avoid unnecessary training iterations, which may avoid wasting computational resources.

Whether the uncertainty estimation quality is high or low may be determined based on whether the uncertainty estimation quality is within a predefined interval (in which case the quality would be high) or outside of the predefined interval (in which case the quality would be low). Providing an interval for determining the uncertainty estimation quality allows to define case-by-case requirements concerning the required level of uncertainty estimation quality. For a safety critical system on which the model is intended to be deployed, the interval may be selected smaller than for an uncritical system.

Estimating the uncertainty estimation quality may comprise determining an uncertainty estimation quality value for each a data sample of the set of data samples based on the predicted feature of the object 150a-b in the scene presentation, the predicted uncertainty associated with the predicted feature and a ground truth associated with the predicted feature of the data sample. Determining the uncertainty estimation quality value may be based on a ratio between an error (e.g., a difference) between the predicted feature and its associated ground truth, and the predicted uncertainty. In some implementations, the uncertainty estimation quality may be estimated based on at least a second data sample (i.e., the uncertainty estimation quality is determined based on a plurality of data samples). The uncertainty estimation quality may be further estimated based on a statistical property of an uncertainty distribution. The uncertainty distribution may be based on the uncertainty estimation quality value of the first data sample and optionally on an uncertainty estimation quality value of at least the second data sample. In an exemplary implementation, an uncertainty estimation quality value may be determined according to the following equation:

$$M_n = \frac{(G_n - P_n)}{\sigma_n} \text{ or } M_n = \frac{(P_n - G_n)}{\sigma_n}$$

wherein $M_n$ denotes the uncertainty estimation quality value of the $n^{th}$ data sample, $P_n$ denotes the predicted feature of the object 150a-b, $G_n$ denotes the associated ground truth and $\sigma_n$ denotes a post-processed predicted uncertainty associated with the predicted feature. Post-processing may be done by calculating the post-processed predicted uncertainty according to the following equation:

$$U_n = \log(\sigma_n^2)$$

$$\sigma_n = \sqrt{e^{\log(\sigma_n^2)}}$$

or

$$\sigma_n = e^{\left(\frac{\log(\sigma_n^2)}{2}\right)}$$

wherein $U_n$ denotes the predicted uncertainty associated with the predicted feature. In this implementation, $\frac{(G_n - P_n)}{\sigma_n}$ may refer to the above-mentioned ratio between the error between the predicted feature and its associated ground truth, and the post-processed predicted uncertainty.

Due to the deterministic nature of a model, commonly used evaluation techniques like a Monte-Carlo simulation are not applicable for evaluating the uncertainty estimation quality of a model. This is because the model will always produce the same output (in terms of a prediction) for a given input. Accordingly, no meaningful distribution based on one data sample can be obtained using a Monte-Carlo simulation.

However, this problem may be overcome by combining multiple data samples and scaling them by a division by the corresponding $\sigma$ into one reasonable distribution. This way, a Monte-Carlo simulation may be emulated by each data sample representing one sample of the Monte-Carlo simulation.

As the uncertainty estimation quality highly depends on the used data set, the uncertainty estimation quality may vary for different data sets. Therefore, in some examples, it may be beneficial to use different data sets to estimate the uncertainty estimation quality of the model. For example, one may determine a first uncertainty estimation quality based on a first data set, a second uncertainty estimation quality based on a second data set and so forth. The uncertainty estimation quality of the model may then be estimated by, e.g., using the mean of the first and second uncertainty estimation qualities. It may also be possible to determine whether a threshold number of the first and second uncertainty estimation qualities is below a given threshold to determine that the uncertainty estimation quality of the model is good enough.

The scaling is done by the above-mentioned ratio, which ensures that each sample n is scaled into one single uncertainty distribution (e.g., to form an expected zero-mean distribution). This way, all samples N of a data set can be used to assess the uncertainty estimation quality, even if data samples relate to different predictions (i.e., samples of different distributions $d(GT_n, \sigma_n)$ having different ground truth mean and uncertainty standard deviation values).

In this implementation, the statistical property may refer to a standard deviation and the uncertainty distribution may be determined using N data samples and their corresponding uncertainty values. This may be represented as

$$C = std(M_n), for\ n = 1 \dots N.$$

Other statistical properties, like using a variance, instead of standard deviation may be applicable. The uncertainty estimation quality Q may then be determined by $Q = C - 1$.

For example, assume a distance to an object is to be predicted for three different data samples to determine the uncertainty estimation quality. For a first data sample, a distance of 9.5 m may be predicted/sampled from $d_1(10m, 2m)$, wherein 10m is the ground truth and 2m is the uncertainty standard deviation (i.e., the post-processed predicted uncertainty based on the predicted uncertainty). The corresponding uncertainty value may be determined as

$$M_1 = \frac{(10-9.5)}{2} = 0.25.$$

For a second data sample, a distance of 11m may be predicted/sampled from $d_2(10m, 2m)$, wherein 10m is the ground truth and 2m is the predicted uncertainty standard deviation. The corresponding uncertainty value may be determined as

$$M_2 = \frac{(10-11)}{2} = -0.5.$$

For a third data sample, a distance of 22m may be predicted/sampled from $d_3(20m, 4m)$, wherein 20m is the ground truth and 4m is the predicted uncertainty standard deviation. The corresponding uncertainty value may be determined as

$$M_3 = \frac{(20-22)}{4} = -0.5.$$

The values 0.25, 0.5 and 0.5 may be denoted as an uncertainty distribution.

As a result, the uncertainty estimation quality would be determined as

$$Q = C - 1 = std(M_1, M_2, M_3) - 1 = 0.354 - 1 = -0.646.$$

Using these equations, an ideal uncertainty estimation quality may be assumed if $Q=0$. A value of Q being < 0 may indicate that the model's estimation quality is pessimistic, i.e., the model's predicted uncertainty is larger than the implied (aleatoric) uncertainty. A value of Q being > 0 may indicate that the model's estimation quality is optimistic, i.e., the model's predicted uncertainty is smaller than the implied (aleatoric) uncertainty. The absolute value of |Q| may indicate the actual quality of the estimation quality (i.e., the larger the worse the quality is). Accordingly, the predefined interval may be an interval around the value of o. For example, the predefined interval may be [-0.5 , +0.5]. A value of the uncertainty estimation quality being within this predefined interval may indicate that the quality is high, while a value of the uncertainty estimation quality being outside of this predefined interval may indicate that the quality is low. Alternatively, determining whether the uncertainty estimation quality is high or low may be done by comparing the uncertainty estimation quality against a threshold. When doing so, the uncertainty estimation quality (e.g., the absolute value of |Q|) may be compared against the threshold (e.g., 0.5). If for example the absolute value is smaller than or equal to the threshold, the uncertainty estimation quality may be high. If the absolute value is larger than the threshold, the uncertainty estimation quality may be low.

Fig. 3a illustrates an overview of a first architecture 300a of an object detection model according to aspects of the present invention. The first architecture 300a of the model comprises two main components. A network backbone 310 and an object detection head 320. The network backbone 310 may be a pre-trained model used for feature pre-processing (e.g., ResNet, ImageNet etc.). The object detection head 320 maybe customized to the given use case (e.g., object detection in a scene representation generated from Lidar data, radar data or image data) and trained using corresponding training data while the weights of the network backbone 310 are frozen (i.e. not adjusted during training).

In the first architecture 300a, the object detection head 320 may output an object classification 330, an object regression 340 as well as a regression uncertainty 350. The object classification 330 describes the type of the detected object 150a-b (e.g., the object being classified as a pedestrian). The object regression 340 describes the predicted feature of the object 150a-b (e.g., the distance to the object or the position of the object). The regression uncertainty 350 describes the predicted uncertainty associated with the predicted feature of the object 150a-b. The network bone 310, object detection head 320 as well as the corresponding outputs object classification 330 and object regression 340 may be based on network structures known in the art. In order to easily incorporate the regression uncertainty output 350 into an existing architecture, the regression uncertainty output 350 is designed as an add-on module, which allows to keep the existing network structure by at the same time extending the network capabilities.

The advantage of the first architecture 300a is that only minor adaptions of the network have to be conducted, e.g., incorporating the additional output. Therefore, additional computational complexity is minimized.

Fig. 3b illustrates an overview of a second architecture 300b of an object detection model according to aspects of the present invention. The second architecture 300b of the model comprises three main components. A network backbone 310, an object detection head 320 and an regression uncertainty head 360. The network backbone 310 may be a pre-trained model used for feature pre-processing (e.g., ResNet, ImageNet etc.). The object detection head 320 and the regression uncertainty head 360 may be customized to the given use case (e.g., object detection in a scene representation generated from LiDAR data, radar data or image data) and trained using corresponding training data, while the weights of the network backbone 310 are frozen (i.e. not adjusted during training).

In the second architecture 300b, the object detection head 320 may output an object classification 330 and an object regression 340. The object classification 330 describes the type of the detected object 150a-b (e.g., the object being classified as a pedestrian). The object regression 340 describes the predicted feature of the object 150a-b (e.g., the distance to the object or the position of the object). Compared to the first architecture 300a, the second architecture 300b comprises an individual regression uncertainty head 360, which may output the regression uncertainty 350. The regression uncertainty 350 describes the predicted uncertainty associated with the predicted feature of the object 150a-b. As can be seen from the coloring, grey boxes (i.e., the network bone 310, object detection head 320 as well as the corresponding outputs object classification 330 and object regression 340) may refer to already existing network structures. In order to easily incorporate the regression uncertainty output 350 into an existing architecture, the regression uncertainty output 350 is designed as an add-on module, which allows to keep the existing network structure and at the same time to extend the networks capabilities by adding the regression uncertainty head 360.

The advantage of the second architecture 300b is that the model's capability with respect to the uncertainty estimation may be increased, because feature embeddings are only partially shared and thus the uncertainty prediction is separated from the object detection head 320.

Depending on the use case, it may be beneficial to use the first architecture 300a or the second architecture 300b. If computational costs are neglectable, and/or a high accuracy regarding the uncertainty estimation is required (e.g., in safety critical systems) the second architecture 300b may be selected. Should computational resources be limited and a certain degree of inaccuracy regarding the uncertainty estimation quality is acceptable, the first architecture 300a may be selected. It is to be understood that these are only exemplary implementations and that alternative implementations (e.g., the model only outputting an object regression 340 and the regression uncertainty 350) are also encompassed by the present disclosure.

Fig. 4 illustrates an overview of training 400 an object detection model 410 according to aspects of the present invention. Once a model architecture is selected (e.g., first architecture 300a or second architecture 300b), the model 410 has to be trained in order to receive meaningful predictions from the model 410. As mentioned with respect to Fig. 3, the capability of uncertainty estimation may be designed as an add-on module for existing object detection models. Nevertheless, due to the amended overall model architecture, a corresponding adapted training procedure 400 is required.

Training 400 the model 410 may be based on a plurality of training data samples. Each training data sample may comprise a scene representation including an object 150a-b and a ground truth 420 for each feature of the object 150a-b. A scene representation may be generated based on radar data of the scene, image data of the scene, LiDAR data of the scene or a combination thereof. A ground truth 420 may indicate bounding box information associated with the object 150a-b, wherein the bounding box information may comprise a position of the object, a distance to the object, a speed of the object or a rotation of the object. For example, the scene representation may be an image including a pedestrian and a feature of the object 150a-b may be a position of the pedestrian. The ground truth 420 for the feature may then be an actual (i.e., labeled) position of the pedestrian (e.g., in x/y coordinates within the image, wherein the image may be represented as a coordinate system in which, for example, the top left corner may represent the origin having the coordinates o/o). For training 400 the model 410, the corresponding scene representation of each training data sample is input into the model 410. The model 410 then outputs, for each input scene representation, a predicted feature 430 of the object 150a-b (e.g., the position of the object) and a predicted uncertainty 440 associated with the predicted feature 430. A set of prediction parameters (e.g., weights) of the model 410 may then be adjusted for each training data sample based on the predicted feature 430 of the object 150a-b, the corresponding ground truth 420 for the feature of object 150a-b and the predicted uncertainty 440 associated with the predicted feature 430 of the object 150a-b. In some implementations, the set of prediction parameters maybe adjusted after every $n^{th}$ training data sample (e.g., the set of prediction parameters may be adjuster after every $10^{th}$ training data sample).

The goal of training 400 the model 410 is to minimize an error (also called loss) between the prediction 430 and the corresponding ground truth 420 by adjusting the set of prediction parameters of the model 410 (e.g., weights of the model) using corresponding optimizers (e.g., stochastic or mini-batch gradient descent, preferably with momentum, Adagrad, RMSProp, AdaDetlta, Adam, etc.) during back-propagation.

The loss is determined using a loss function. In the present case, where a model 410 having the additional uncertainty prediction module is trained, a key task is to efficiently train 400 the model 410 to predict a feature 430 of an object 150a-b (i.e., object detection) and to predict the associated uncertainty 440, without reciprocal degradation. This is achieved using the training procedure 400 of the present invention which uses a combined loss function, comprising a regression loss function 450 and an uncertainty loss function 460. The regression function 450 is used to minimize the regression loss 470 with respect to the object detection 430 (i.e., predicting the feature of the object). The uncertainty loss function 460 is used to minimize the (uncertainty) regression loss 480 with respect to the uncertainty prediction 440 (i.e., predicting the uncertainty associated with the predicted feature). Both losses 470 and 480 are combined by means of arithmetic (e.g., summing, addition etc.) to produce a final loss 490, which ultimately is to be minimized.

An important factor during training 400 is how both losses 470-480 are combined to produce the final loss 490. Accordingly, it may be beneficial to first train the model 410 with respect to the object detection task 430 and, once a sufficient accuracy is achieved, to incorporate the uncertainty regression loss 460. Therefore, the regression loss (a first loss) 470 may be associated with a first loss weight and the uncertainty regression loss (a second loss) 480 may be associated with a second loss weight. The combined loss function may be:

$$Loss_{final} = w_1 \times rl + w_2 \times url$$

wherein $w_1$ denotes a first loss weight, $w_2$ denotes a second loss weight, $rl$ denotes the regression loss 470 of the object detection (i.e., the predicted feature of the object) and $url$ denotes the uncertainty regression loss 480 of the predicted uncertainty associated with the predicted feature of the object.

A value of the first and second loss weights may be between an upper weight limit value and a lower weight limit value. The first and second loss weight may be adapted during training 400 based on a value of the first 470 loss and second loss 480 respectively. Prior to starting the training 400, the value of the first loss weight may be set to the upper weight limit value and the value of the second loss weight may be set to the lower weight limit value. In an example, the upper weight limit value may be set to 1 and the lower weight limit value may be set to o. Accordingly, prior to starting the training 400, the first loss weight may be set to 1 and the second loss weight may be set to o. As a result, when training 400 the model 410, only the regression loss 470 may be considered for minimizing, since the uncertainty regression loss 480 is multiplied by 0 and is thus not considered in the final loss 490. Once the regression loss 470 is sufficiently low (e.g., the regression loss is smaller than or equal to a detection quality threshold), meaning that the accuracy of the object detection is sufficiently high, the value of the second loss weight maybe adapted. In one possible implementation, the second loss weight may be set to the upper weight limit (1 in this example). In a second possible implementation, the second loss weight may be incrementally increased by a preset value (e.g., after a certain amount of training data samples, the second loss weight may be increased by 0.1). This increasing may be done until the second loss weight reaches the upper weight limit value. As a result, when continuing training 400, the uncertainty regression loss 480 in now considered for minimizing the final loss 490. However, in order to not affect the object detection quality, which has been optimized prior when the second loss weight was set to 0, during back-propagation for optimizing the uncertainty prediction 440, the predicted feature 430 and the corresponding ground truth 420 are not considered for back-propagation and do thus not contribute to the gradients (illustrated by the dashed lines in Fig. 4). In some implementations, the uncertainty loss function 460 may be a Laplace likelihood loss function and the second loss 480 may be determined based on a difference between an uncertainty ratio and a scaled regression error. The Laplace likelihood loss function may be noted as:

$$L(G, P, U) = \frac{1}{N} \sum_{n}^{N} -\frac{U_n}{2} - \sqrt{2}e^{-\frac{U_n}{2}}|G_n - P_n|$$

$$U_n = \log(\sigma_n^2)$$

wherein $G_n$ denotes the ground truth 420 for the predicted feature 430 for training data sample n, $P_n$ denotes the predicted feature 430 of the object 150a-b inside the scene representation, $U_n$ denotes a predicted uncertainty 440 associated with the predicted feature 430 and N denotes the number of training data samples. As mentioned above, $U_n$ may be a statistical value, preferably a standard deviation, associated with the predicted feature 430. The uncertainty ratio may refer to $-\frac{U_n}{2}$ while the scaled regression error may refer to $\sqrt{2}e^{-\frac{U_n}{2}}|G_n - P_n|$, wherein $\sqrt{2}e^{-\frac{U_n}{2}}$ is a scaling factor and $|G_n - P_n|$ a regression error. By defining the predicted uncertainty $U_n$ 440 associated with the predicted feature 430, mathematical stability during optimization is improved.

As a result, the model 410 may be trained until the second loss 460 is sufficiently low and thus also the final loss 490 without affecting the accuracy of the object detection. However, in order to obtain a conclusive assessment of the model's performance (i.e., predicting the feature of the object and especially the model's uncertainty estimation quality), a validation step as described with respect to the method 200 of Fig. 2 may be conducted. After the method 200 has been performed and assuming that the model 410 needs no further training (i.e., the model's performance is sufficiently optimized), the model 410 is application ready. This means, a computer-implemented method for object detection according to the present invention, may receive a scene representation, generate, using the model 410, a predicted feature 430 of an object 150a-b within the scene representation and a predicted uncertainty 440 associated with the predicted feature 430 of the object 150a-b within the scene representation.

The methods according to the present invention may be implemented in terms of a computer program which may be executed on any suitable data processing device comprising means (e.g., a memory and one or more processors operatively coupled to the memory) being configured accordingly. The computer program may be stored as computer-executable instructions on a non-transitory computer-readable medium.

Embodiments of the present disclosure may be realized in any of various forms. For example, in some embodiments, the present invention may be realized as a computer-implemented method, a computer-readable memory medium, or a computer system.

In some embodiments, a non-transitory computer-readable memory medium may be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a computing device may be configured to include a processor (or a set of processors) and a memory medium, where the memory medium stores program instructions, where the processor is configured to read and execute the program instructions from the memory medium, where the program instructions are executable to implement any of the various method embodiments described herein (or, any combination of the method embodiments described herein, or, any subset of any of the method embodiments described herein, or, any combination of such subsets). The device may be realized in any of various forms.

Although specific embodiments have been described above, these embodiments are not intended to limit the scope of the present disclosure, even where only a single embodiment is described with respect to a particular feature. Examples of features provided in the disclosure are intended to be illustrative rather than restrictive unless stated otherwise. The above description is intended to cover such alternatives, modifications, and equivalents as would be apparent to a person skilled in the art having the benefit of this disclosure.

The scope of the present disclosure includes any feature or combination of features disclosed herein (either explicitly or implicitly), or any generalization thereof, whether or not it mitigates any or all of the problems addressed herein. In particular, with reference to the appended claims, features from dependent claims may be combined with those of the independent claims and features from respective independent claims may be combined in any appropriate manner and not merely in the specific combinations enumerated in the appended claims.

**Claims**

1.  A computer-implemented method (200) for evaluating a prediction quality of a model (410) usable for detecting objects (150a-b) (140a-b), the method comprising the steps of:

    inputting (210), into the model (410), a set of data samples, each data sample comprising a scene representation including an object (150a-b);
    outputting (220), by the model (410), a set of predictions, the set of predictions comprising, for each data sample of the set of data samples, a predicted feature (120) of the object (150a-b) in the scene representation and a predicted uncertainty (130) associated with the predicted feature (120);
    estimating (230) an uncertainty estimation quality of the model based on the set of predictions; and
    determining (240), based on the uncertainty estimation quality, whether a further training (400) of the model (410) to improve the uncertainty estimation quality is required.

2.  The method of the preceding claim, wherein estimating the uncertainty estimation quality comprises:
    generating an uncertainty distribution by, for each of the predicted features of the set of predictions, scaling a difference between the predicted feature of the object and a corresponding ground truth.

3.  The method of the preceding claim, wherein estimating the uncertainty estimation quality further comprises:
    determining the uncertainty estimation quality by calculating a statistical property of the uncertainty distribution.

4.  The method of any one of the preceding claims 2-3, wherein scaling comprises: determining a post-processed predicted uncertainty based on the predicted uncertainty (130) and dividing the difference by the post-processed predicted uncertainty.

5.  The method of any one of the preceding claims, wherein conducting the further training (400) of the model (410) comprises:

    determining a first loss (470) associated with a first loss weight using a regression loss function (450);
    determining a second loss (480) associated with a second loss weight using an uncertainty loss function (450); and
    combining the first loss (470) and the second loss (480) according to the associated first and second loss weights.

6.  The method of the preceding claim, wherein training (400) the model (400) further comprises:
    adapting a value of the first weight and/or a value of the second weight based on the first loss (470) and/or the second loss (480), wherein the value of the first weight and the value of the second weight is between an upper weight limit value and a lower weight limit value.

7.  The method of the preceding claim, further comprising:
    setting, prior to training (400), the value of the first loss weight to the upper weight limit value and the value of the second loss weight to the lower weight limit value; and wherein adapting further comprises:

    determining that the first loss (470) is smaller than or equal to a detection quality threshold; and
    setting the value of the second weight to the upper weight limit value; or

increasing the value of the second weight by a preset value.

8. The method of any one of the preceding claims, wherein the scene representation is generated based on at least one of: radar data, image data, Light Detection and Ranging, LiDAR, data.

9. The method of any one of the preceding claims, wherein the predicted feature (120) of the object (150a-b) in the scene representation indicates bounding box information associated with the object (150a-b), comprising at least one of:
a position of the object, a size of the object, a speed of the object, a rotation of the object.

10. A computer-implemented method for detecting objects in a vicinity of a vehicle, the method comprising the steps of:

receiving a scene representation; and
generating a predicted feature (120) of an object (150a-b) within the scene representation and a predicted uncertainty (130) associated with the predicted feature (120) of the object (150a-b) within the scene representation;
wherein generating is based on a model (410) usable for detecting objects (150a-b) evaluated according to the method of claims 1 to 9.

11. A model (410) usable for detecting objects (150a-b), the model (410) being evaluated according to the method of any one of the claims 1 to 9.

12. The model (410) of the preceding claim, wherein the model (410) comprises:

an object detection head (320) configured to output a predicted feature (120) of an object (150a-b) within scene representation; and
an uncertainty head (360) configured to output a predicted uncertainty (130) associated with the predicted feature (120) of the object (150a-b) within the scene representation.

13. A computer program comprising instructions, which when executed by a computer, causing the computer to perform the method of any one of the claims claim 1 to 9 or 10.

14. An apparatus comprising means configured to perform the method of any one of the claims claim 1 to 9 and/or claim 10.

15. A vehicle, comprising the apparatus of claim 14.

110

Model Output

120

Distance to object

(e.g., 10 m)

130

Uncertainty

(e.g., 2 m or 4 m)

**Fig. 1a**

140a

A

10m

2m 2m

150a

m

140b

A

10m

4m 4m

150b

m

**Fig. 1b**

200

210

Inputting, into the model, a set of data samples, each data sample comprising a scene representation including an object

220

Outputting, by the model, a set of predictions, the set of predictions comprising, for each data sample of the set of data samples, a predicted feature of the object in the scene representation and a predicted uncertainty associated with the predicted feature

230

Estimating an uncertainty estimation quality of the model based on the set of predictions

240

Determining, based on the uncertainty estimation quality, whether a further training of the model to improve the uncertainty estimation quality is required

Fig. 2

Fig. 3a

Fig. 3b

Fig. 4

**EUROPEAN SEARCH REPORT**

Europäisches
Patentamt
European
Patent Office
Office européen
des brevets

| Application Number |
| --- |
| **EP 22 19 4913** |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | US 2021/117760 A1 (KRISHNAN RANGANATH [US] ET AL) 22 April 2021 (2021-04-22) | 1-7, 10-15 | INV. G06N3/02 G06V10/776 |
| Y | * abstract; figure all * * paragraphs [0041], [0042], [0086], [0043] – [0046], [0071], [0035] * ----- | 8,9 | |
| Y | EP 3 789 920 A1 (FIVE AI LTD [GB]) 10 March 2021 (2021-03-10) * paragraphs [0074], [0049] * ----- | 8,9 | |

| TECHNICAL FIELDS SEARCHED (IPC) |
| --- |
| G06N G06V |

The present search report has been drawn up for all claims

| Place of search | Date of completion of the search | Examiner |
| --- | --- | --- |
| The Hague | 13 February 2023 | Winne, Dominique |

## ANNEX TO THE EUROPEAN SEARCH REPORT
## ON EUROPEAN PATENT APPLICATION NO.

EP 22 19 4913

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2023

| Patent document cited in search report | | Publication date | Patent family member(s) | | Publication date |
|---|---|---|---|---|---|
| US 2021117760 | A1 | 22-04-2021 | NONE | | |
| EP 3789920 | A1 | 10-03-2021 | CN | 114269620 A | 01-04-2022 |
| | | | CN | 114270368 A | 01-04-2022 |
| | | | CN | 114270369 A | 01-04-2022 |
| | | | CN | 114286773 A | 05-04-2022 |
| | | | CN | 114303174 A | 08-04-2022 |
| | | | EP | 3789920 A1 | 10-03-2021 |
| | | | EP | 4018375 A1 | 29-06-2022 |
| | | | EP | 4018376 A1 | 29-06-2022 |
| | | | EP | 4018377 A1 | 29-06-2022 |
| | | | EP | 4018378 A1 | 29-06-2022 |
| | | | EP | 4018379 A1 | 29-06-2022 |
| | | | US | 2022269279 A1 | 25-08-2022 |
| | | | US | 2022289218 A1 | 15-09-2022 |
| | | | US | 2022297707 A1 | 22-09-2022 |
| | | | US | 2022297709 A1 | 22-09-2022 |
| | | | US | 2022300810 A1 | 22-09-2022 |
| | | | WO | 2021037760 A1 | 04-03-2021 |
| | | | WO | 2021037761 A1 | 04-03-2021 |
| | | | WO | 2021037763 A1 | 04-03-2021 |
| | | | WO | 2021037765 A1 | 04-03-2021 |
| | | | WO | 2021037766 A1 | 04-03-2021 |

EPO FORM P0459

For more details about this annex : see Official Journal of the European Patent Office, No. 12/82

# EP 4 336 407 A1

**Non-patent literature cited in the description**

- Towards safe autonomous driving: Capture uncertainty in the deep neural network for LiDAR 3D vehicle detection. **FENG, DI ; ROSENBAUM, LARS ; DIET-MAYER, KLAUS.** 2018, 21st international conference on intelligent transportation systems (ITSC). IEEE, 2018